# EUROPÄISCHE PATENTANMELDUNG

(11) **EP 1 712 697 A2**
(43) Veröffentlichungstag der Anmeldung: **18.10.2006**
(21) Anmeldenummer: 06405164.2
(22) Anmeldetag: 12.04.2006
(51) Int. Cl.: E04C 3/07, E04C 3/09, H02G 3/04

(54) **Montageprofil**

(30) Priorität: 14.04.2005 CH 6772005
(71) Anmelder: ZURECON AG, CH-8003 Zürich (CH)
(72) Erfinder: Pfluger, Gerd, 4625 Oberbuchsiten (CH)
(74) Vertreter: Rutz, Peter

(57) **Zusammenfassung**

Das Montageprofil (1), das insbesondere dem Tragen von Lasten und/oder der Führung von Kabel (5) dient, besteht aus zwei vorzugsweise identischen Vorrichtungsteilen (1A, 1B) aus Blech, die ein erstes und ein zweites Seitenelement (11, 12) aufweisen, die ein L-Profil bilden und von denen das erste Seitenelement (11) des einen Vorrichtungsteils (1A) mit dem zweiten Seitenelement (12) des anderen Vorrichtungsteils (1B) derart verbunden ist, dass ein hohles Rechteckprofil gebildet wird. Anhand der beiden Vorrichtungateile (1A, 1B) die ohne Materialverlust aus einem Blech (100) ausgeschnitten werden können, kann mit wenigen Fertigungsschritten ein stabiles und leichtes und universell eineetzbaree Montageprofil (1) gebildet werden.

## Beschreibung

Die Erfindung betrifft ein Montageprofil nach dem Oberbegriff des Patentanspruchs 1.

Wesentliche Konstruktionselemente in Gebäuden sind Montageprofile, insbesondere Träger oder stabförmige Bauteile, wie sie in [1], Dubbel, Taschenbuch für den Maschinenbau, Springer Verlag, 17. Auflage, Berlin 1990, Seiten C8 bis C34 beschrieben sind. Diese Bauteile bestehen normalerweise aus dickem, einstückig geformtem Stahl mit einem Profil, wie es in [1], Seite C14, Tabelle 2 gezeigt ist. Träger dieser Art, beispielsweise Doppel-T-Träger, lassen sich in einfacher Weise, wie in [1] beschrieben, für einen bestimmten Anwendungsfall bzw. Belastungsfall dimensionieren. Ferner weisen derartige Träger kompakte Abmessungen auf, so dass sie vorteilhaft in eine Baukonstruktion integriert werden können.

Nachteilig bei diesen Trägern sind deren Gewicht und der auf die Tragfunktion beschränkte Nutzen.

Der vorliegenden Erfindung liegt daher die Aufgabe zugrunde, ein verbessertes Montageprofil zu schaffen. Insbesondere ist ein leichteres und vielseitiger verwendbares Montageprofil zu schaffen.

Diese Aufgabe wird mit einem Montageprofil gelöst, welches die in Anspruch 1 angegebenen Merkmale aufweist. Vorteilhafte Ausgestaltungen der Erfindung sind in weiteren Ansprüchen angegeben.

Das Montageprofil, das insbesondere dem Tragen von Lasten und/oder der Führung von Kabel dient, besteht einem ersten und einem zweiten stabförmigen Vorrichtungsteil, die formschlüssig derart miteinander verbunden sind, dass ein tragfähiges Hohlprofil mit rechteckigem, dreieckigem oder trapezoidem Querschnitt gebildet wird, und die peripher zueinander korrespondierende erste Seitenelemente aufweisen, die über ein am ersten und/oder zweiten Vorrichtungsteil vorgesehenes zweites Seitenelement miteinander verbunden sind.

In vorzugsweisen Ausgestaltungen sind die beiden Vorrichtungsteile oder die ersten und/oder zweiten Seitenelemente der beiden Vorrichtungsteile identisch ausgestaltet, gegebenenfalls jedoch mit unterschiedlichen Öffnungen versehen.

Die beiden Vorrichtungsteile werden vorzugsweise aus einem Blechstück geschnitten, wobei die ersten Seitenelemente der beiden Vorrichtungsteile innerhalb des Blechstücks entlang einer Peripherielinie verzahnend ineinander eingreifen. Die beiden Vorrichtungsteile können daher ohne Materialverluste in einem Arbeitsgang gefertigt werden. Das Montageprofil, das mit wenigen Handgriffen durch Zusammensetzen und Verbinden der beiden Vorrichtungsteile hergestellt werden kann, wird Material sparend befestigt, weist ein geringes Gewicht auf, ist innen gut zugänglich und universell einsetzbar. Durch die Wahl identischer Vorrichtungsteile kann die die Produktion und Montage weiter vereinfacht werden.

In vorzugsweisen Ausgestaltungen ist wenigstens eines der Seitenelemente mit Strukturelementen erhöhter Festigkeit, beispielsweise mit einer Reihe von Öffnungen versehen, die je durch einen in das Montageprofil hinein ragenden Kragen begrenzt sind. Durch die gefertigten Kragen erhält das betreffende Seitenelement und somit das Montageprofil eine erhöhte Festigkeit. Durch die Öffnungen können zudem Kabel und Leitungen zu- und weggeführt werden. Ferner können in die Öffnungen auch Ausleger und Verbindungselemente eingesetzt werden. Die Öffnungen können eingestanzt werden, wobei die Öffnungsränder angehalst werden, um den erwünschten Kragen zu bilden.

An den äusseren Enden sind die Seitenelemente der beiden Vorrichtungsteile mit ersten und zweiten Verbindungselementen versehen, mittels derer die beiden Vorrichtungsteile formschlüssig miteinander verbunden werden können.

Beispielsweise können die ersten Verbindungselemente ausgeschnittene und gebogene, ein- oder beidseitig gehaltene Laschen oder Endstücke sein, die in die als Öffnungen ausgestalteten zweiten Verbindungselemente einführbar und gegebenenfalls durch Biegen oder Pressen oder mittels eines Arretierelements arretierbar sind. Als erste Verbindungselemente dienende Endstücke, die in eine Öffnung am gegenüberliegenden Vorrichtungsteil einführbar sind, sind am ersten Seitenelement besonders vorteilhaft realisierbar, da dafür nur eine entsprechende Anpassung des Verlaufs des Schnitts notwendig ist, mittels dessen die beiden Vorrichtungsteile voneinander getrennt werden. Bei dieser Ausgestaltung können die beiden Vorrichtungsteile auch besonders einfach miteinander verbunden werden, da die Endstücke in die Richtung zeigen, in die die Vorrichtungsteile gegeneinander geführt werden, und somit automatisch in die zweiten Verbindungselemente eingreifen.

Die ersten und/oder zweiten Seitenelemente können ferner ein gegebenenfalls unterteiltes Flanschelement aufweisen, das abgewinkelt das anschliessende Seitenelement überlappt und gegebenenfalls mit den ersten oder zweiten Verbindungselementen versehen ist.

Die ersten Seitenelemente der beiden Vorrichtungsteile sind vorzugsweise derart mit einer Reihe von Zahnelementen, beispielsweise Dreiecken versehen, dass sie unterbruchsfrei ineinander verzahnt und somit auch in einfacher Weise, nur durch einen entsprechend verlaufenden Schnitt, aus einem Blechstück geschnitten oder gestanzt werden können.

In vorzugsweisen Ausgestaltungen ist innerhalb oder ausserhalb des Montageprofils wenigstens ein block- oder rohrförmiges; starres oder hartelastisches Stabilisierungs-, End-, Kopplungs- oder Verbindungsmodul aus Metall, Holz oder Kunststoff vorgesehen, das zumindest teilweise formschlüssig an das Montageprofil anschliesst und durch das ein ästhetischer oder funktionaler Abschluss des Montageprofils, eine Ankopplung an weitere Montageprofile oder Montageelemente, oder eine Bündelung mehrer Montageprofile ermöglicht wird, durch die eine individuelle Adaption an verschiedne Lasten möglich ist.

Zur Bündelung von Montageprofilen sind daran vorzugsweise Elemente, wie entsprechend ausgestaltete Öffnungen und Kragen, oder Haken, etc., vorgesehen, die die formschlüssige Kopplung mehrerer Montageprofile erlauben oder zumindest unterstützen.

Nachfolgend wird die Erfindung, einschliesslich weiterer vorzugsweiser Ausgestaltungen, anhand von Zeichnungen beispielsweise näher erläutert. Dabei zeigt:
- Figur 1: zwei aus einem Blech 100 ausgestanzte identische Vorrichtungsteile 1A, 1B, die zur Herstellung eines Montageprofils 1 vorgesehen sind;
- Figur 2: die beiden ineinander verzahnten und um wenige Millimeter voneinander getrennten Vorrichtungsteile 1A, 1B von Figur 1, die mit zueinander korrespondierenden Verbindungselementen 112, 131 versehen sind;
- Figur 3: eines der Vorrichtungsteile 1A, 1B von Figur 1 in räumlicher Ansicht;
- Figur 4: die beiden fertig gebogenen Vorrichtungsteile 1A, 1B von Figur 1 beim gegenseitigen Zusammensetzen;
- Figur 5: ein erfindungsgemässes Montageprofil 1, das durch die zusammengesetzten und miteinander verbundenen Vorrichtungsteile 1A, 1B von Figur 4 gebildet wird;
- Figur 6: ein Schnitt durch ein erfindungsgemässes Montageprofil 1, das mit auskragenden Öffnungen 111 versehen ist und in dem Kabel oder Leitungen 5 verlegt sind;
- Figur 7: das Montageprofil 1 von Figur 6 mit einem darin eingesetzten Stabilisierungsmodul 2, das eine der Durchführung von Kabel oder Leitungen 5 dienende Öffnung 21 aufweist;
- Figur 8: das Montageprofil 1 von Figur 5 unter Last mit einem inneren Stabilisierungsmodul 2 und einem äusseren Stabilisierungs- Kopplungs- oder Endmodul 20, 200;
- Figur 9: zwei aus einem Blech 100 ausgestanzte identische Vorrichtungsteile 1A, 1B, an denen einfacher ausgestaltete Verbindungselemente 112' vorgesehen sind;
- Figur 10: das aus den Vorrichtungsteilen 1A, 1B von Figur 9 bestehende Montageprofil 1 beim Verschliessen der Verbindungselemente 112';
- Figur 11: ein zur Aufnahme des Montageprofils 1 dienendes Stabilisierungs- Kopplungs- oder Endmodul 20, 200;
- Figur 12: zwei aus einem Blech 100 ausgestanzte nicht identische Vorrichtungsteile 1A, 1B, die zur Herstellung eines Montageprofils 1 vorgesehen sind, das ein Hohlprofil mit dreieckigem Querschnitt aufweist;
- Figur 13: in räumlicher Ansicht ein Vorrichtungsteil 1A, 1B, dessen erstes Seitenelement 11 rechteckige Zahnelemente 110 aufweist;
- Figur 14: drei mittels der Vorrichtungsteile 1A, 1B von Figur 12 gefertigte Montageprofile 1, die mittels Öffnungen 111, und Kragen 1111 sowie mittels eines Verbindungselements 2000 formschlüssig miteinander verbunden sind; und
- Fig. 15: die Vorrichtungsteile 1A, 1B von Figur 1 mit vorzugsweise ausgestalteten dreieckigen Zahnelementen 110.

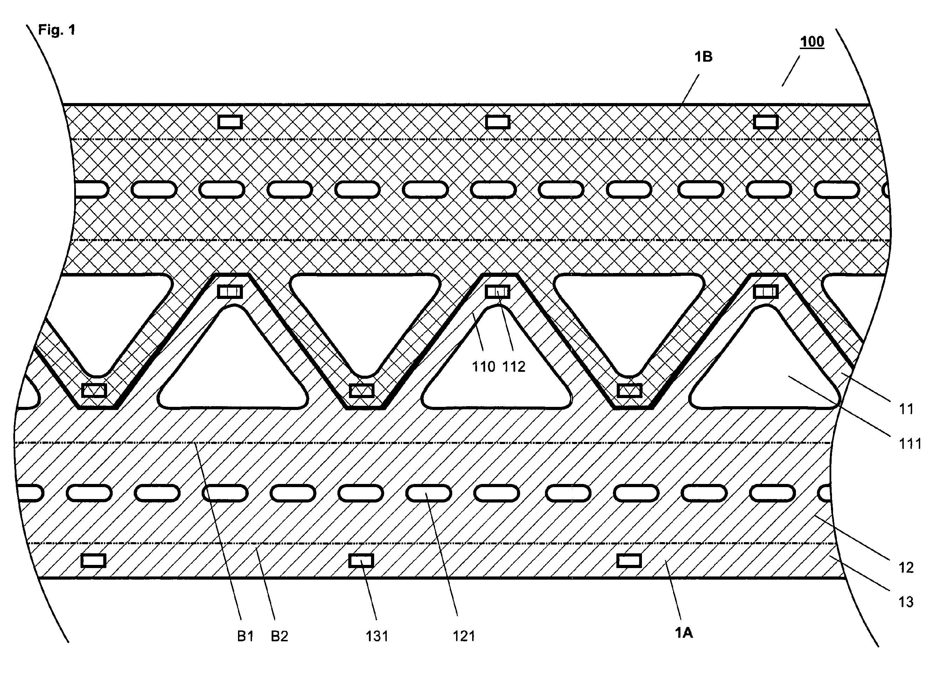

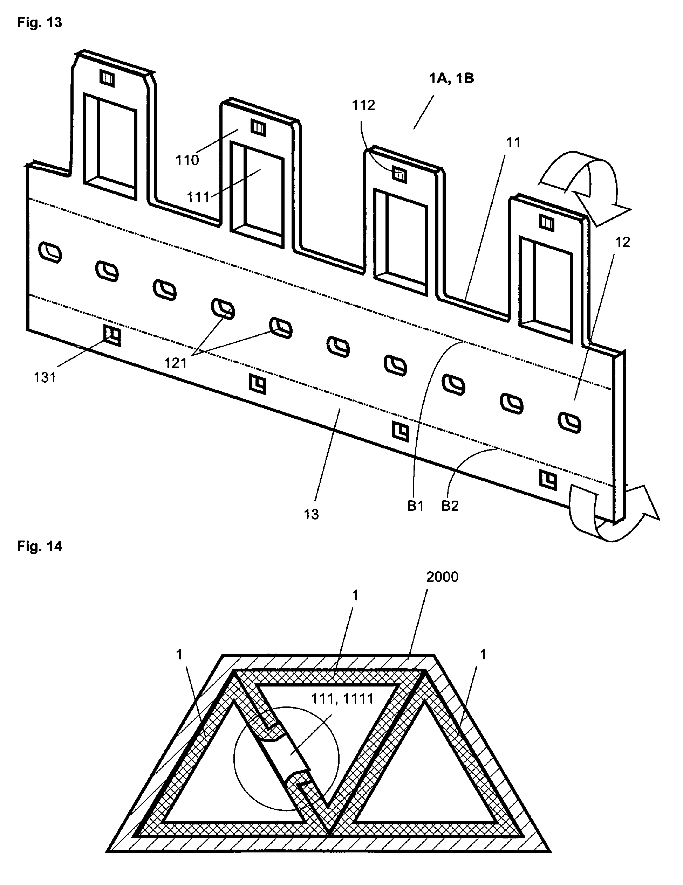

Figur 1 zeigt zwei aus einem Blech 100 ausgestanzte identische Vorrichtungsteile 1A, 1B, die zur Herstellung eines Montageprofils 1 vorgesehen sind. In jedem der beiden Vorrichtungsteile 1A, 1B sind eine erste und eine zweite Biegelinie B1 bzw. B2 eingezeichnet, durch die die Vorrichtungsteile 1A, 1B in drei Bereiche 11, 12 und 13 unterteilt sind. Die erste Biegelinie B1 trennt ein erstes und ein zweites, mit Montageöffnungen 121 versehenes Seitenelement 11, 12 voneinander. Durch die zweite Biegelinie B2 wird ein streifenartiges Flanschelement 13 vom zweiten Seitenelement 12 getrennt. Auf dem Flanschelement 13 des ersten Vorrichtungsteils 1A sind zweite Verbindungselemente bzw. Öffnungen 131 vorgesehen, die zu ersten Verbindungselementen 112 korrespondieren, die am ersten Seitenelement 11 des zweiten Vorrichtungsteils 1B vorgesehen sind. Die ersten Seitenelemente 11 der beiden Vorrichtungsteile 1A, 1B sind mit ineinander verzahnten Dreiecken 110 versehen, aus denen Öffnungen 111 ausgeschnitten sind. Das präzise gegenseitige sägezahnartige Schneiden erlaubt die Verwendung eines schmalen Blechstreifens 100 und somit die Reduktion von Materialaufwand und Gewicht sowie die Vermeidung von Materialverlusten. Wie in Figur 13 gezeigt, können selbstverständlich auch andere mehr oder weniger ineinander eingreifende bzw. peripher aneinander anschliessende, beispielsweise rechteckige oder trapezoide Formen gewählt werden.

Aus Figur 1 ist ersichtlich, dass die beiden Vorrichtungsteile 1A, 1B mit den genannten Elementen mit minimalem Aufwand in einem einzigen Arbeitsschritt aus dem Blech 100 ausgestanzt werden können, dessen Dicke entsprechend der Festigkeit gewählt wird, die für das herzustellende Montageprofil erforderlich ist. Typischerweise wird ein verzinktes Blech mit einer Dicke von wenigen Millimetern gewählt.

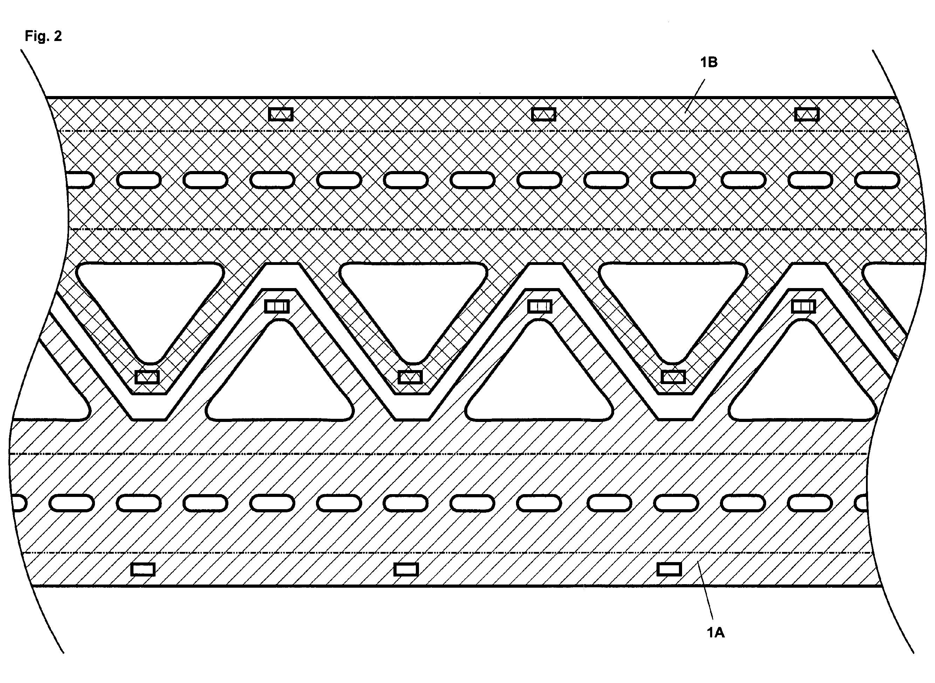

Figur 2 zeigt die beiden noch ineinander verzahnten, aber um wenige Millimeter voneinander getrennten Vorrichtungsteile 1A, 1B von Figur 1.

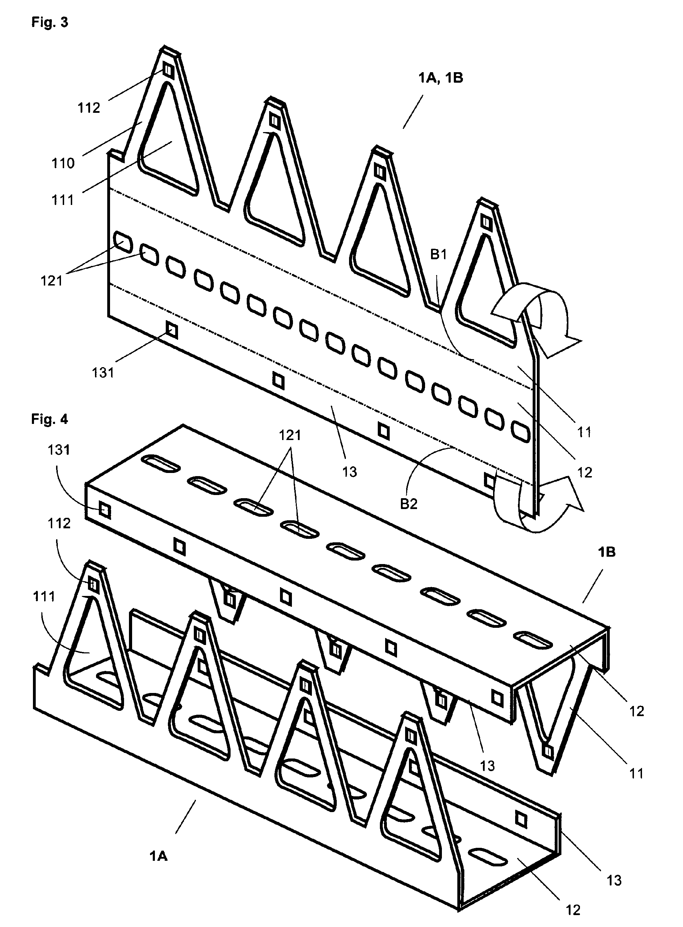

Figur 3 zeigt eines der Vorrichtungsteile 1A, 1B in räumlicher Ansicht mit der ersten Biegelinie B1, um die die beiden Seitenelemente 11, 12 gegeneinander gebogen werden, und mit der zweiten Biegelinie B2, um die das Flanschelement 13 gegen das erste Seitenelement 12 abgewinkelt wird.

Figur 4 zeigt die beiden fertig gebogenen Vorrichtungsteile 1A, 1B von Figur 1 beim gegenseitigen Zusammensetzen. Die beiden Seitenelemente 11, 12 der Vorrichtungsteile 1A, 1B bilden ein L-Profil und werden durch das abgewinkelte Flanschelement 13 ansatzweise zu einem U-Profil ergänzt.

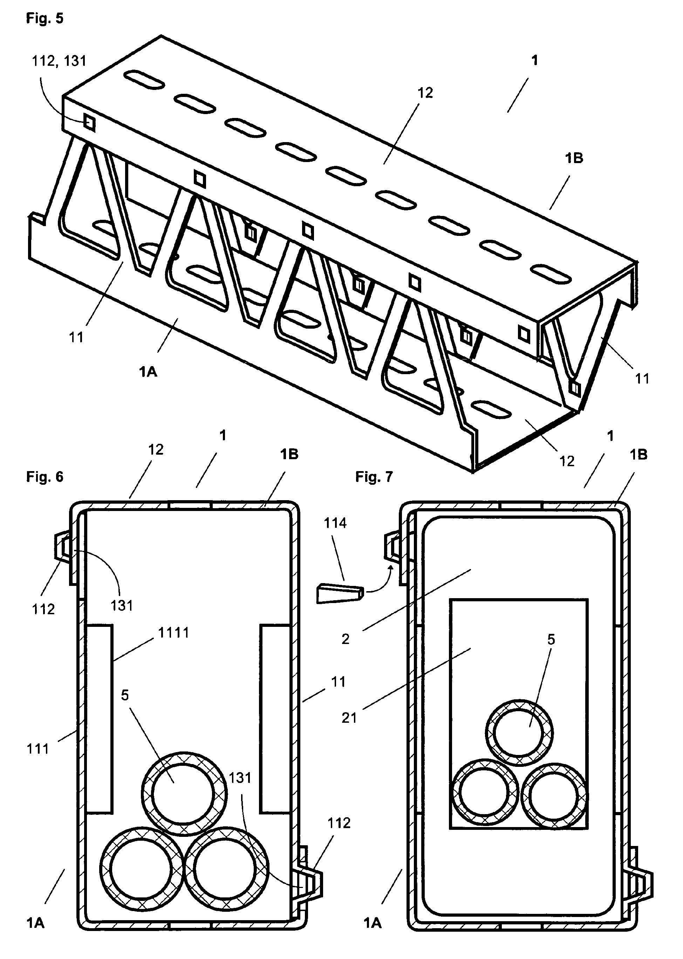

Beim Zusammensetzen der beiden identischen Vorrichtungsteile 1A, 1B wird das erste Seitenelement 11 des einen Vorrichtungsteils 1A mit dem zweiten Seitenelement 12 des anderen Vorrichtungsteils 1B derart verbunden, dass ein hohles Rechteckprofil gebildet wird, wie es in Figur 5 gezeigt ist.

Bei dem in Figur 5 gezeigten Montageprofil 1 liegen die ersten Seitenelemente 11 und die zweiten Seitenelemente 12 je in zueinander parallelen Ebenen. Die Flanschelemente 13 überlappen die ersten Seitenelemente 11 derart, dass die ersten und zweiten Verbindungselemente 112, 131 zusammenwirken können. Die an den ersten Seitenelementen 11 vorgesehenen ersten Verbindungselemente 112 sind beispielsweise aus dem Blech 100 ausgeschnittene und gebogene Laschen oder Haken, die in die als Öffnungen ausgebildeten zweiten Verbindungselemente 131 eintreten und dort verankert werden können. Beispielsweise werden die in die Öffnungen eingeführten Laschen oder Haken verpresst oder mittels eines Arretierelements 114 arretiert (siehe die beispielsweise Ausgestaltung von Figur 7).

Nach der Arretierung der miteinander gekoppelten Verbindungselemente 112, 131 wird durch die beiden miteinander verbundenen Vorrichtungsteile 1A, 1B ein stabiles Montageprofil 1 gebildet, dessen Festigkeit durch weitere Massnahmen erhöht werden kann.

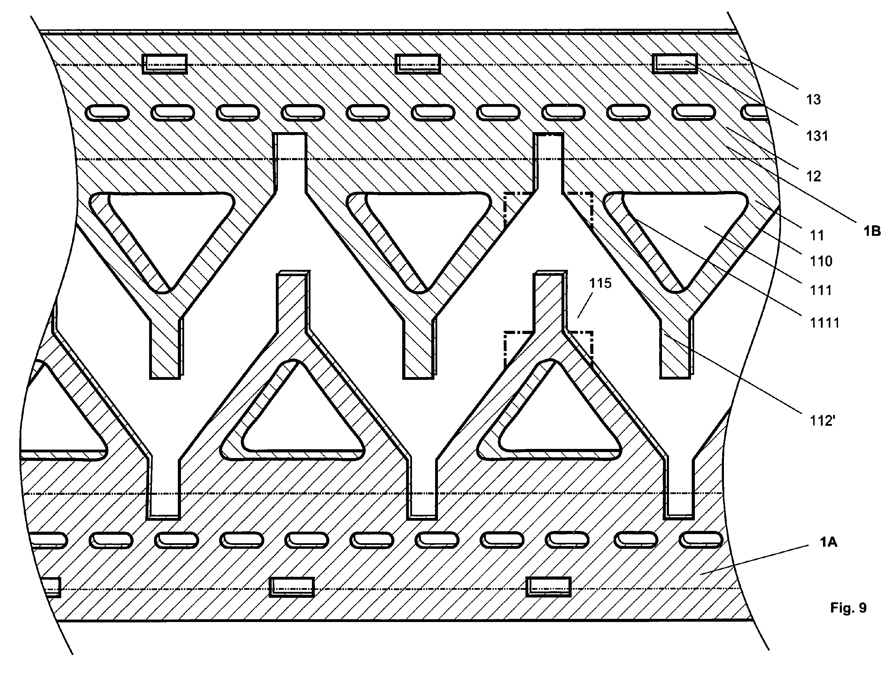

Figur 6 zeigt einen Schnitt durch ein erfindungsgemässes Montageprofil 1, dessen erste Seitenelemente 111 mit Öffnungen 111 versehen sind, an die ein in das Montageprofil 1 hineinragender Kragen 1111 anschliesst. Das Material der Öffnungen 111 wurde daher nicht, zumindest nicht vollständig, ausgeschnitten, sondern nach innen (oder aussen) gepresst (siehe z.B. auch Figur 9), um das Montageprofil 1 zu verstärken. Der Kragen 1111, der bereits bei einer Tiefe von wenigen Millimetern eine erhöhte Festigkeit gewährleistet, kompensiert das ausgeschnittene Material um ein mehrfaches und verleiht dem Montageprofil 1 eine stark erhöhte Torsions- und Knickfestigkeit. Die Ausformung der Kragen 1111 kann rationell im selben Arbeitsgang mit dem Schneiden der beiden Vorrichtungsteile 1A, 1B durchgeführt werden.

In Figur 6 und Figur 7 ist ferner das erste Verbindungselement 112 gut ersichtlich, das als Lasche in das als Öffnung ausgestaltete zweite Verbindungselement 131 eingreift und mittels eines Keils 114 arretierbar ist. Alternativ kann die Lasche 112 auch zur Seite gebogen oder verpresst werden, so dass sie nicht mehr durch die Öffnung 131 zurückweichen kann. Ferner ist gezeigt, dass innerhalb des Montageprofils 1 vorteilhaft Kabel und Leitungen verlegt werden können.

Figur 7 zeigt das Montageprofil 1 von Figur 6 mit einem darin eingesetzten Stabilisierungsmodul 2, das eine der Durchführung von Kabel oder Leitungen 5 dienende Öffnung 21 aufweist. Stabilisierungsmodule 2 werden vorzugsweise an Stellen eingesetzt an denen Kräfte von aussen auf das Montageprofil einwirken. Besonders vorteilhaft ist die Verwendung von hartelastischen Stabilisierungsmodulen 2, durch die die punktuell einwirkenden Kräfte flächig auf das Montageprofil 1 verteilt werden.

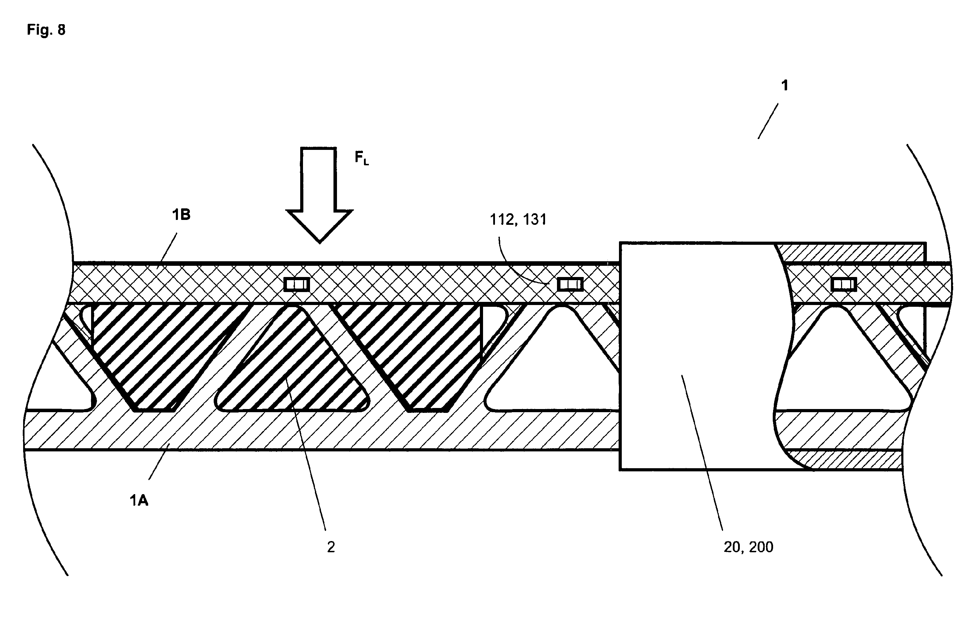

Figur 8 zeigt das Montageprofil 1 von Figur 5 unter Einwirkung einer Last F_{L} an einer Stelle, die mittels eines inneren Stabilisierungsmoduls 2 verstärkt ist. In Figur 8 ist ferner ein hülsenförmiges äusseres Stabilisierungsmodul 20, 200 gezeigt, das das Montageprofil 1 formschlüssig umfasst und stabilisiert. Das äussere Stabilisierungsmodul 20, 200 kann ferner als Endmodul dienen, welches das Montageprofil 1 ästhetisch und/oder funktional vorteilhaft abschliesst.

Figur 9 zeigt zwei aus einem Blech 100 ausgestanzte identische Vorrichtungsteile 1A, 1B, an denen einfacher ausgestaltete erste Verbindungselemente 112' vorgesehen sind. Die ersten Verbindungselemente 112' bestehen aus plattenförmigen Endstücken, welche an den Dreiecken 110 der ersten Seitenelemente 111 angefügt sind.

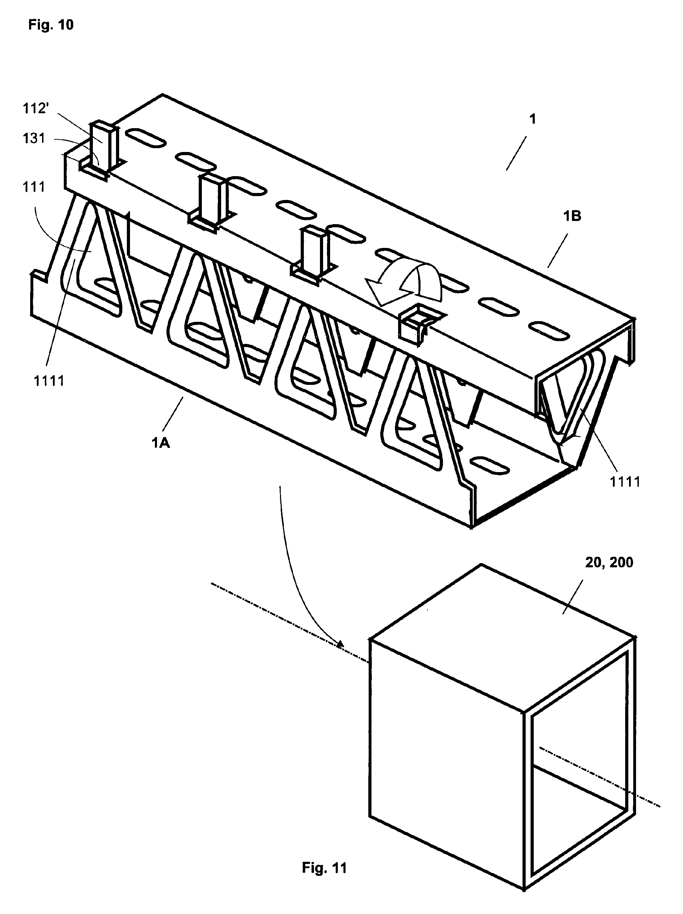

Nach dem Biegen der Vorrichtungsteile 1A, 1B können diese besonders einfach miteinander verbunden werden, da die ersten Verbindungselemente 112' bzw. die plattenförmigen Endstücke geradlinig durch die als Öffnungen ausgestalteten zweiten Verbindungselemente 131 hindurch gestossen werden können und lediglich noch abgebogen werden müssen, wie dies in Figur 10 gezeigt ist.

Figur 11 zeigt ein der Aufnahme des Montageprofils 1 von Figur 10 dienendes äusseres Stabilisierungs- oder Endmodul 20, 200.

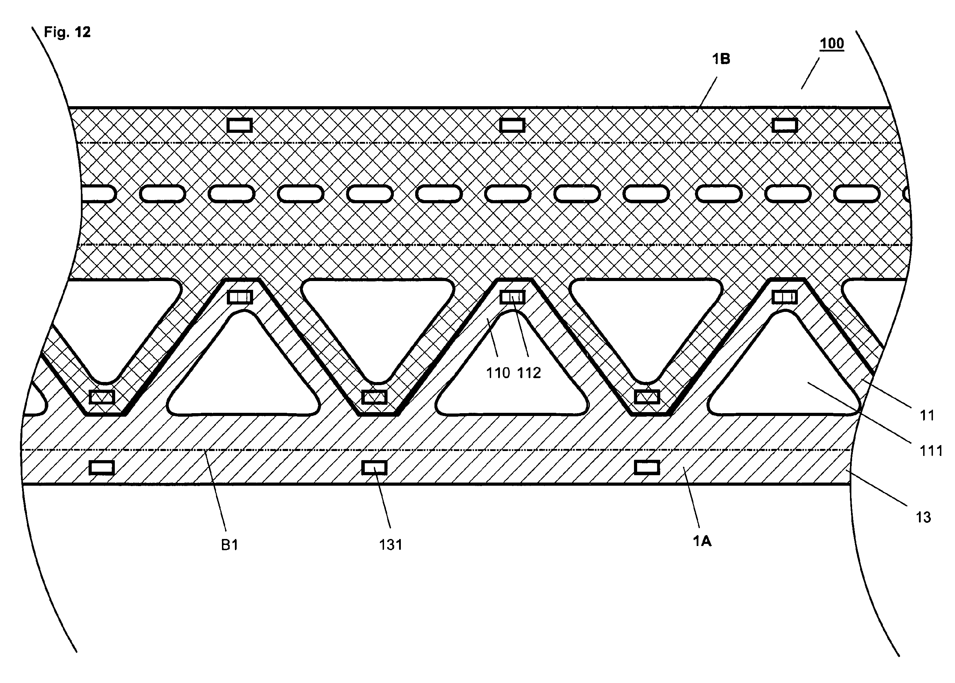

Figur 12 zeigt zwei aus einem Blech 100 ausgestanzte nicht identische Vorrichtungsteile 1A, 1B, die zur Herstellung eines Montageprofils 1 vorgesehen sind, das ein Hohlprofil mit dreieckigem Querschnitt aufweist. Beim ersten Vorrichtungsteil 1A fehlt das zweite Seitenelement 12 vollständig. Durch entsprechende Wahl eines zweiten Seitenelements 12 kann jedoch auch ein Hohlprofil mit trapezoidem Querschnitt gefertigt werden.

Figur 13 zeigt ein Vorrichtungsteil 1A, 1B mit rechteckförmigen Zahnelementen 110 mit rechteckförmigen, auskragenden Öffnungen 111.

Figur 14 zeigt schematisch drei mittels der Vorrichtungsteile 1A, 1B von Figur 12 gefertigte Montageprofile 1, die mittels Öffnungen 111 und Kragen 1111 sowie mittels eines Verbindungselements 2000 formschlüssig miteinander verbunden sind. Durch die Bündelung mehrerer Montageprofile 1 können daher Tragstrukturen realisiert werden, die individuell an verschiedene Lasten anpassbar sind. Durch die ineinander greifenden Öffnungen 111 und Kragen 1111 resultiert eine optimale Kopplung der einzelnen Montageprofile 1 und somit eine gleichmässige Lastaufteilung.

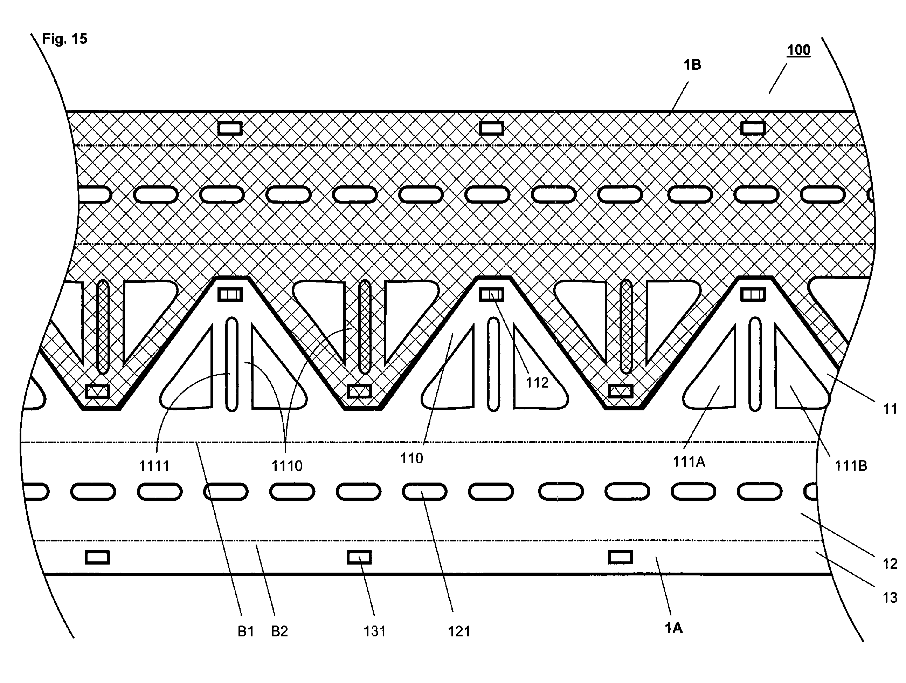

Figur 15 zeigt die Vorrichtungsteile 1A, 1B von Figur 1 mit vorzugsweise ausgestalteten dreieckigen Zahnelementen 110, die zwei symmetrisch zueinander angeordnete, annähernd dreieckige Lochungen oder Öffnungen 111A, 111B aufweisen, in deren Symmetrieachse ein Steg 1110 angeordnet ist, der den Zahnelementen 110 eine wesentlich höhere Festigkeit verleiht. Um die Festigkeit des Steg 1110 zu erhöhen, ist dieser mit einer Sicke 1111 oder Einpressung versehen. Die nur einen unwesentlich grösseren Herstellungsaufwand verursachenden Vorrichtungsteile 1A, 1B von Figur 15 weisen daher eine wesentlich höhere Festigkeit auf.

Das erfindungsgemässe Montageprofil 1 wurde in bevorzugten Ausgestaltungen beschrieben und dargestellt. Anhand der erfindungsgemässen Lehre sind jedoch weitere fachmännische Ausgestaltungen realisierbar. Insbesondere sind beliebige Ausgestaltungen der ersten und zweiten Seitenelemente 11, 12 und der ersten und zweiten Verbindungselemente 112 (112'), 131 realisierbar. Zur Verstärkung des Montageprofils 1 können weitere strukturelle Elemente wie Biegungen oder Sicken vorgesehen werden. Die Öffnungen 111 in den Seitenelementen 11, 12 können derart ausgestaltet werden, dass erfindungsgemässe Montageprofile 1 leicht koppelbar sind, so dass anhand der Montageprofile 1 abgehängte Decken realisierbar sind. Durch die Öffnungen 111 in den Seitenelementen 11, 12 können Kabel und Leitungen zu und weggeführt werden, was insbesondere für abgehängte Decken besonders vorteilhaft ist, an denen, gegebenenfalls in Labors, Büros oder Verkaufsstellen, beispielsweise Arbeitsplätze punktuell mit Energie- und Datenleitungen zu versorgen sind. Das erfindungsgemässe Montageprofil 1 kann selbstverständlich auch als Säule verwendet werden, die beispielsweise mit einer abgehängten Decke gekoppelt ist. In der abgehängten Decke können leichtere oder schwere Lasten, beispielsweise Lampen, Stromschienen, etc., verlegt und montiert werden. Je nach Anwendung werden jeweils Montageprofile 1 verwendet, welche die zum Tragen der maximal auftretenden Lasten geeignet sind.

Die Verbindung der beiden Vorrichtungsteile 1A und 1B erfolgt vorzugsweise mit den beschriebenen mittels Verbindungselementen 112, 131; 112', 131. Möglich und oft vorteilhaft anwendbar sind jedoch auch Nietverbindungen, Schraubverbindungen, Schweissverbindungen und/oder Toxverbindungen. Betreffend die Fertigung von Toxverbindungen, die beispielsweise mittels Zangen realisierbar sind, siehe beispielsweise die TOX®-Blechverbindungssysteme der TOX® PRESSOTECHNIK GmbH & Co. KG, D-88250 Weingarten. Möglich ist natürlich die Kombination von Verbindungstechniken. Beispielsweise werden die Vorrichtungsteile 1A und 1B mittels Punktschweissen, Schrauben oder Klammern gegenseitig fixiert, wonach die Niet- oder Toxverbindungen erstellt werden.

## Patentansprüche

1. Montageprofil (1) insbesondere für das Tragen von Lasten und/oder die Führung von Kabel oder Leitungen, **dadurch gekennzeichnet, dass** ein erstes und ein zweites stabförmiges Vorrichtungsteil (1A, 1B) aus Blech vorgesehen sind, die formschlüssig derart miteinander verbunden sind, dass ein tragfähiges Hohlprofil gebildet wird, und die peripher zueinander korrespondierende erste Seitenelemente (11) aufweisen, die über ein am ersten und/oder zweiten Vorrichtungsteil (1A, 1B) vorgesehenes zweites Seitenelement (12) miteinander verbunden sind.

2. Montageprofil (1) nach Anspruch 1, **dadurch gekennzeichnet, dass** die beiden Vorrichtungsteile (1A, 1B) oder die ersten und/oder zweiten Seitenelemente (11, 12) der beiden Vorrichtungsteile (1A, 1B) identisch sind und/oder dass die beiden Vorrichtungsteile (1A, 1B) ein Hohlprofil mit rechteckigem, dreieckigem oder trapezoidem Querschnitt bilden.

3. Montageprofil (1) nach Anspruch 1 oder 2, **dadurch gekennzeichnet, dass** wenigstens eines der Seitenelemente (11) mit einer Reihe von Öffnungen (111) versehen ist, die je durch einen in das Montageprofil (1) hinein oder aus dem Montageprofil (1) heraus ragenden Kragen (1111) begrenzt sind und/oder dass die Öffnungen (111) mit einem Steg (1110) verstärkt sind, der vorzugsweise mit einer Sicke (1111) versehen ist.

4. Montageprofil (1) nach Anspruch 1, 2 oder 3, **dadurch gekennzeichnet, dass** die beiden Vorrichtungsteile (1A, 1B) aus einem Blechstück (100) geschnitten sind, wobei eine gemeinsame Peripherielinie vorgesehen ist, so dass die ersten Seitenelemente (11) der beiden Vorrichtungsteile (1A, 1B) ineinander eingreifen können.

5. Montageprofil (1) nach Anspruch 4, **dadurch gekennzeichnet, dass** die ersten Seitenelemente (11) der beiden Vorrichtungsteile (1A, 1B) einen zahnförmigen Verlauf aufweisen und aus einer Reihe von Zahnelementen (110) wie Dreiecken, Rechtecken oder Trapezen bestehen, die gegebenenfalls mit den Öffnungen (111) versehen sind.

6. Montageprofil (1) nach einem der Ansprüche 1 bis 5, **dadurch gekennzeichnet, dass** die Seitenelemente (11, 12) der beiden Vorrichtungsteile (1A, 1B) mit ersten und zweiten Verbindungselementen (112, 131; 112', 131) versehen sind, mittels derer die beiden Vorrichtungsteile (1A, 1B) formschlüssig miteinander verbunden sind und/oder dass die beiden Vorrichtungsteile (1A, 1B) mittels Nietverbindungen, Schraubverbindungen, Schweissverbindungen und/oder Toxverbindungen miteinander verbunden sind.

7. Montageprofil (1) nach Anspruch 6, **dadurch gekennzeichnet, dass** die ersten Verbindungselemente (112; 112') ausgeschnittene und gebogene, ein- oder beidseitig gehaltene Laschen oder Endstücke sind, die in die als Öffnungen ausgestalteten zweiten Verbindungselemente (131) einführbar und gegebenenfalls durch Biegen oder Pressen oder mittels eines Arretierelements (114) arretierbar sind.

8. Montageprofil (1) nach Anspruch 6 oder 7, **dadurch gekennzeichnet, dass** die ersten und/oder zweiten Seitenelemente (11, 12) ein gegebenenfalls unterteiltes Flanschelement (13) aufweisen, das abgewinkelt das benachbarte Seitenelement (12 bzw. 11) überlappt.

9. Montageprofil (1) nach Anspruch 6 oder 7, **dadurch gekennzeichnet, dass** die ersten oder zweiten Verbindungselemente (112, 131; 112', 131) am Flanschelement (13) vorgesehen sind.

10. Montageprofil (1) nach einem der Ansprüche 1 bis 9, **dadurch gekennzeichnet, dass** innerhalb oder ausserhalb des Montageprofils (1) wenigstens ein block- oder rohrförmiges; starres oder hartelastisches Stabilisierungs-, End-, Kopplungs- oder Verbindungsmodul (2, 20, 200, 2000) aus Metall, Holz oder Kunststoff vorgesehen ist, das zumindest teilweise formschlüssig an das Montageprofil (1) anschliesst und durch das ein ästhetischer oder funktionaler Abschluss des Montageprofils (1), eine Ankopplung an weitere Montageprofile (1) oder Montageelemente, oder eine Bündelung mehrer Montageprofile (1) ermöglicht wird.

11. Montageprofil (1) nach einem der Ansprüche 1 bis 10, **dadurch gekennzeichnet, dass** an den Montageprofil (1) Elemente, wie entsprechend ausgestaltete Öffnungen (111) und Kragen (1111), vorgesehen sind, die die formschlüssige Kopplung mehrerer Montageprofile (1) erlauben.
